# EUROPEAN PATENT APPLICATION

(11) **EP 3 067 389 A1**
(43) Date of publication of application: **14.09.2016**
(21) Application number: 14857739.8
(22) Date of filing: 22.10.2014
(51) Int. Cl.: C08L 23/00, C08L 23/08, C08L 53/00, C08J 5/00

(54) **POLYMER COMPOSITION FOR THREE-DIMENSIONAL PRINTER**

(30) Priority: 04.11.2013 KR 20130133186
(71) Applicant: Fine Chemical Co., Ltd., Gimhae-si, Gyeongsangnam-do 621-801 (KR)
(72) Inventor: LEE, Sung Yull, Busan 607-753 (KR)
(74) Representative: Kastel, Stefan
(86) International application number: PCT/KR2014/009951
(87) International publication number: WO 2015/064954

(57) **Abstract**

Provided is a polymer composition for a three-dimensional printer. The polymer composition includes a polymer matrix containing an olefin block copolymer. The olefin block copolymer has a peak melting point of 100 to 150 °C, as measured by differential scanning calorimetry (DSC), and a Shore A hardness not higher than 95. The polymer matrix has a melt index (190 °C, 2.16 kg) of 1 to 30 g/10 min.

## Description

### Technical Field

The present disclosure relates to a polymer composition for a three-dimensional printer, and more specifically to a composition for a three-dimensional printer that is rapidly solidified during the manufacture of a solid article by three-dimensional printing and has excellent slip properties.

### Background Art

Three-dimensional (3D) printers are machines for manufacturing three-dimensionally shaped objects by sequentially spraying inks of special materials to stack thin layers. The application of 3D printing extends to various fields. Many companies employ 3D printing to manufacture various models, including medical dummies and household articles, such as toothbrushes and razors, as well as various materials and parts of automotive vehicles.

Photopolymers are the most widely used materials in 3D printing. Photopolymers are photocurable polymeric materials that are hardened when exposed to light. Photopolymers account for 56% of the overall market for 3D printing materials. The next popular 3D printing materials are thermoplastic plastics in the form of solids that are free to melt and harden. Such thermoplastic plastics make up 40% of the current market for 3D printing materials. The demand for metal powders is also expected to rise gradually in the next few years. The thermoplastic materials may take the form of filaments, particles or powders. Filament type 3D materials are advantageous in productivity because of their higher printing speeds than any other type of materials. This explains the widespread use of filament type 3D printing materials.

Polylactic acid (PLA), acrylonitrile butadiene styrene (ABS), high density polyethylene (HDPE), and polycarbonate (PC) are currently used as filament materials for the following reasons. First, the filament materials are rapidly solidified after printing due to their appropriately high melting points. As a result, the filament materials are not likely to deform and maintain their good dimensional and shape stability even at high printing speeds. Second, the filament materials are easy to extrude in the production of filaments and can be used to produce filaments with high efficiency due to their appropriately low melting points. If the melting points of filament materials are excessively high, high power consumption is required to melt filaments and interior parts of printers should be made of materials capable of withstanding heat, causing an unnecessary increase in cost.

All four kinds of filament materials fulfilling the above requirements have high Shore D hardness values of 50 or more. These materials fail to meet the requirements of 3D printing materials where low hardness and soft feeling are needed. For example, models for infants, craft models for school education, shoes, and models for toys can be made more realistic by 3D printing using soft materials with low hardness. There is thus a need to develop new materials for 3D printing.

### Detailed Description of the Invention

According to one aspect of the present invention, a polymer composition for a three-dimensional printer is provided which includes a polymer matrix containing an olefin block copolymer having a peak melting point of 100 to 150 °C, as measured by differential scanning calorimetry (DSC), and a Shore A hardness not higher than 95 wherein the polymer matrix has a melt index (190 °C, 2.16 kg) of 1 to 30 g/10 min.

According to a further aspect of the present invention, filaments for a three-dimensional printer are provided that are produced by extrusion of a composition including a polymer matrix containing an olefin block copolymer wherein the polymer matrix has a Shore A hardness not higher than 90, a melt index (190 °C, 2.16 kg) of 1 to 30 g/10 min, and a melt index (120 °C, 10 kg) not higher than 3.0 g/10 min.

According to another aspect of the present invention, pellets for a three-dimensional printer are provided that are produced by extrusion of a composition including a polymer matrix containing an olefin block copolymer wherein the polymer matrix has a Shore A hardness not higher than 90, a melt index (190 °C, 2.16 kg) of 1 to 30 g/10 min, and a melt index (120 °C, 10 kg) not higher than 3.0 g/10 min.

According to another aspect of the present invention, a method for manufacturing a solid article by three-dimensional printing is provided which includes supplying the filaments for a three-dimensional printer to a printing head, ejecting a hot melt of the filaments from the printing head, solidifying the melt to form a printing layer, and repeating the above procedure to stack the printing layers.

According to yet another aspect of the present invention, a method for manufacturing a solid article by three-dimensional printing is provided which includes supplying the pellets for a three-dimensional printer to a printing head, ejecting a hot melt of the pellets from the printing head, solidifying the melt to form a printing layer, and repeating the above procedure to stack the printing layers.

### Brief Description of the Drawings

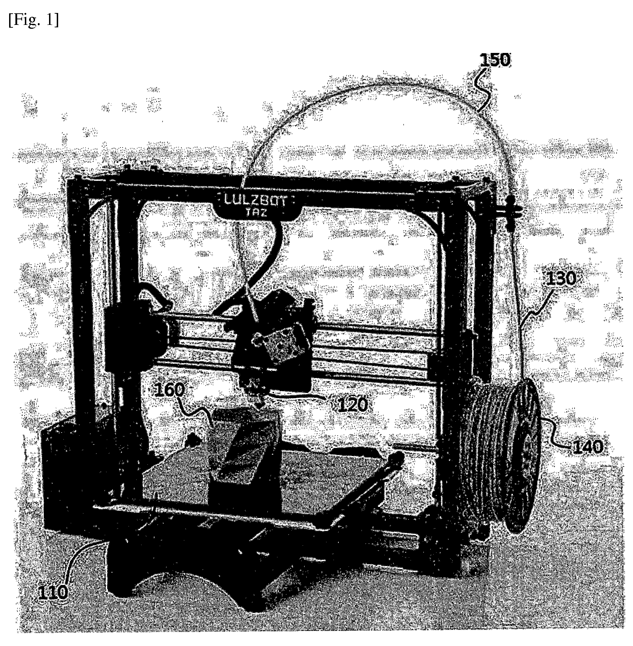

Fig. 1 shows a typical filament type three-dimensional printing system.

### Mode for Carrying out the Invention

The present invention will now be described in more detail with reference to the accompanying drawings. Fig. 1 shows a typical filament type three-dimensional printing system. The three-dimensional printing system of Fig. 1 is exemplified by LulzBot TAZ available from Aleph Objects. Referring to Fig. 1, three-dimensional printing is performed in such a manner that while a base plate 110 moves along the Y axis and a printing head 120 moves along the X- and Z-axes, filaments 130 are ejected from the printing head 120 to form a stack of layers until a desired shape is achieved. The filaments 130 are unrolled from a right reel 140 and are supplied to the printing head 120 through a guide tube 150. The amount of the filaments 130 supplied is controlled by the force and speed of a puller provided in the printing head 120. Like a hot melt adhesive gun, the printing head melts and extrudes the filaments to form a printing layer on the base plate 110. By repeating this procedure, the printing layers are stacked to manufacture a desired article 160.

In principle, the guide tube 150 serves as a passage through which the filaments 130 are readily supplied to the printing head 120 moving up and down, right and left. Without the guide tube 150, the filaments 130 are bent in the middle thereof so that they cannot be supplied in a direction perpendicular to the printing head 120 (in the same direction all the time), making a constant amount of the filaments difficult to supply at a constant rate. In order for the filaments 130 having a diameter of about 1.75 mm to reach the printing head 120 without wandering through the guide tube 150, the inner diameter of the guide tube 150 is preferably adjusted to about 2.0 mm or less such that the clearance between the filaments 130 and the guide tube 150 is as small as possible. Generally, it would also be desirable that the filaments 130 passing through the guide tube 150 are made of a soft material with high hardness.

As already described in the Background Art, problems will arise when high hardness polymers are used as 3D printing materials. As a solution to the possible problems, the use of low hardness polymers is considered. However, most low hardness polymers have low melting points and polymers having required melting points have high hardness, which are against the purposes of the present invention. In view of this situation, the present inventor proposes a composition including an olefin block copolymer (OBC) as an essential material.

One aspect of the present invention provides a polymer composition for a three-dimensional printer which includes a polymer matrix containing an olefin block copolymer having a peak melting point of 100 to 150 °C, as measured by differential scanning calorimetry (DSC), and a Shore A hardness not higher than 95. The composition may optionally further include one or more additives. In this case, the composition has an MI (190 °C, 2.16 kg) of 1 to 30 g/10 min and a Shore A hardness not higher than 90.

The term "olefin block copolymer" used herein generally refers to a block copolymer of polymers including ethylene or propylene and an α-olefin having two or more carbon atoms. The α-olefin is an olefin consisting of at least two carbon atoms and having a terminal carbon-carbon double bond.

Preferably, ethylene or propylene makes up the largest mole fraction of the polymer. Specifically, ethylene or propylene accounts for about 50 mole% of the polymer. More preferably, ethylene or propylene accounts for about 60 mole% or more, about 70 mole% or more or about 80 mole% or more of the polymer. The substantial remainder of the polymer includes one or more other comonomers. The comonomers are preferably α-olefins having three or more carbon atoms. The olefin block copolymer may be an ethylene/octene copolymer. In this case, the polymer includes about 80 mole% or more of ethylene and about 10 to about 15 mole%, preferably about 15 to about 20 mole% of octene.

The olefin block copolymer (OBC) is a multi-block copolymer. The multi-block copolymer refers to a polymer including two or more chemically distinct zones or segments (also called "blocks") that are preferably bonded in a linear configuration, *i.e.* a polymer including chemically distinguished units that are bonded end-to-end to polymerized ethylenic or propylenic functional groups rather than in a pendant or graft configuration.

The olefin block copolymer (OBC) refers to an ethylene/α-olefin multi-block copolymer or a propylene/α-olefin multi-block copolymer. The olefin block copolymer includes ethylene or propylene and one or more copolymerizable α-olefin comonomers in a polymerized form. The olefin block copolymer is characterized by the presence of a plurality of blocks or segments of two or more polymerized monomer units having different chemical or physical properties. The contents of the olefin and α-olefin in the OBC are the same as those in an olefin random copolymer (ORC) described below.

In some embodiments, the multi-block copolymer may be represented by the following formula:

**(AB)n**

wherein **n** is an integer of at least 1, preferably an integer greater than 1, for example, 2, 3, 4, 5, 10, 15, 20, 30, 40, 50, 60, 70, 80, 90, 100 or higher; **A** represents a hard block or segment; and **B** represents a soft block or segment. Preferably, **A** and **B** are linked in a linear configuration rather than in a branched or star configuration. The hard segment refers to a block of polymerized units in which ethylene or propylene is present in a particular amount. In some embodiments, the ethylene or propylene content of the hard segment is 95% by weight or more. In further embodiments, the ethylene or propylene content of the hard segment is 98% by weight or more. That is, in some embodiments, the content of the comonomers in the hard segment is not greater than 5% by weight. In further embodiments, the content of the comonomers in the hard segment is not greater than 2% by weight. In some embodiments, the hard segment is wholly or substantially composed of ethylene or propylene. Meanwhile, the soft segment refers to a block of polymerized units in which the comonomers are present in a particular amount. In some embodiments, the content of the comonomers in the soft segment is 5% by weight or more. In further embodiments, the content of the comonomers in the soft segment is 8% by weight or more, 10% by weight or more, or 15% by weight or more. In further embodiments, the content of the comonomers in the soft segment is 20% by weight or more, 25% by weight or more, 30% by weight or more, 35% by weight or more, 40% by weight or more, 45% by weight or more, 50% by weight or more, or 60% by weight or more.

In one embodiment, the olefin block copolymer may have a density of 0.85 to 0.91 g/cc or 0.86 to 0.88 g/cc.

In one embodiment, the olefin block copolymer may have a melt index (MI, 190 °C, 2.16 kg) of 0.01 to 30 g/10 min, 0.01 to 20 g/10 min, 0.1 to 10 g/10 min, 0.1 to 5.0 g/10 min, 0.1 to 3.0 g/10 min, 0.1 to 1.0 g/10 min, 0.3 to 0.6 g/10 min, or 1.0 to 30 g/10min, as measured by ASTM D1238 (190 °C, 2.16 kg).

Representative examples of suitable olefin block copolymers include those available under the trade name Infuse from Dow Chemical. The OBC used in the present invention has a melting point of at least 100 °C. Due to its high melting point, the olefin block copolymer is rapidly solidified after printing and has good dimensional and shape stability. Since the OBC used in the present invention has a melting point not higher than 150 °C, it is easy to extrude in the production of filaments and can be used to produce filaments with high efficiency. The OBC may have a Shore A hardness exceeding 95 depending on its density. In this case, the hardness of the OBC needs to be lowered by blending with a large amount of oil. However, the use of oil increases the risk of migration and deteriorates the surface slip properties of the product. Thus, it is preferred to adjust the Shore A hardness of the OBC to 95 or less.

The OBC may be used as a main material to provide filaments or pellets as molded products for a three-dimensional printer. The OBC is lighter in weight (specific gravity of 0.85 to 0.90) as well as is softer than existing materials with high hardness, such as PLA, ABS, HDPE, and PC. In addition, the OBC is transparent and is easily colorable, enabling the production of aesthetically attractive filaments. Furthermore, the OBC has additional advantages in that it is nontoxic to humans and can be used to make food-related products.

In addition to the olefin block copolymer, the composition may further include one or more components selected from the group consisting of a process oil, a wax, a thermoplastic elastomer (TPE), an ethylene copolymer, and an olefin random copolymer (ORC) to achieve improved physical properties. The additional components may be included in a total amount of 1 to 25 parts by weight, based on 100 parts by weight of the olefin block copolymer.

The process oil is used to lower the hardness of the composition. The process oil is preferably a paraffin oil that is highly compatible with olefinic polymers, such as OBC. In contrast, naphthenic or aromatic process oils are poorly compatible with olefinic copolymers. The process oil may be included in an amount of 1 to 5 parts by weight, based on 100 parts by weight of the olefin block copolymer. If the amount of the process oil exceeds 5 parts by weight, migration may occur. This migration renders the surface of filaments sticky, resulting in poor surface slip properties, and allows the oil to permeate into the surfaces of filaments and pellets, resulting in poor quality of printed products.

The wax may be, for example, a paraffin wax, a microcrystalline wax or a polyethylene wax. The wax is used to improve the surface slip properties of filaments, allowing the filaments to easily pass through the guide tube of the printer. The wax may be included in an amount of 1 to 5 parts by weight, based on 100 parts by weight of the olefin block copolymer. The presence of the wax in an amount exceeding 5 parts by weight may lead to high hardness and poor flexibility of the final product, causing breakage of the product.

The thermoplastic elastomer may be styrene-butadiene-styrene (SBS), styrene-ethylene-butylene-styrene (SEBS), styrene-isoprene-styrene (SIS), 1,2-polybutadiene, ethylene-propylene-diene (EPDM) or a combination thereof. The addition of the thermoplastic elastomer is effective in reinforcing the elasticity of the composition compared to the single use of the OBC. The thermoplastic elastomer may be included in an amount of 1 to 20 parts by weight, based on 100 parts by weight of the olefin block copolymer. The presence of the thermoplastic elastomer in an amount exceeding 20 parts by weight may lead to poor surface slip properties of filaments or may high melt viscosity of pellets, resulting in low printing speed.

The ethylene copolymer or the olefin random copolymer (ORC) may be mixed to adjust the price of the filament composition. The ethylene copolymer may be a copolymer of i) ethylene and ii) at least one ethylenically unsaturated monomer selected from the group consisting of C₃-C₁₀ α-monoolefins, C₁-C₁₂ alkyl esters of unsaturated C₃-C₂₀ monocarboxylic acids, unsaturated C₃-C₂₀ mono-or dicarboxylic acids, anhydrides of unsaturated C₄-C₈ dicarboxylic acids, and vinyl esters of saturated C₂-C₁₈ carboxylic acids. Specifically, as the ethylene copolymer, there may be mentioned, for example, ethylene vinyl acetate (EVA), ethylene butyl acrylate (EBA), ethylene methyl acrylate (EMA), ethylene ethyl acrylate (EEA), ethylene methyl methacrylate (EMMA), ethylene butene copolymer (EB-Co) or ethylene octene copolymer (EO-Co). The olefin random copolymer may be a random polymer of ethylene or propylene and one or more copolymerizable α-olefin comonomers. For example, the olefin random copolymer may be a copolymer of ethylene or propylene and octene.

The ethylene copolymer or the olefin random copolymer may be included in an amount of 1 to 20 parts by weight, based on 100 parts by weight of the olefin block copolymer. The presence of the ethylene copolymer or the olefin random copolymer in an amount exceeding 20 parts by weight may retard the solidification of filaments or pellets after extrusion.

The composition may further include an antioxidant or a colorant. As the antioxidant, there may be used, for example, Sonnoc, butylated hydroxy toluene (BHT), and Songnox 1076 (octadecyl 3,5-di-tert-butyl-4-hydroxyhydrocinnamate. Various pigments may also be used taking into consideration desired colors of the composition.

The antioxidant or the colorant may be included in an amount of 1 to 5 parts by weight, based on 100 parts by weight of the olefin block copolymer. The presence of the antioxidant or the colorant exceeding 5 parts by weight may cause undesired phenomena, such as blooming, deteriorating the quality of the product.

The final composition may have an MI (190 °C, 2.16 kg) of 1 to 30 g/10 min, preferably 1 to 20 g/10 min, more preferably 1 to 10 g/10 min. If the MI (190 °C, 2.16 kg) of the composition is less than 1.0 g/10 min, filaments may be slowly melted, and as a result, printing does not proceed smoothly or should be retarded. Meanwhile, if the MI (190 °C, 2.16 kg) of the composition exceeds 30 g/10 min, filaments are too fast melted so that it is difficult to maintain the amount and rate of the filaments ejected at constant levels, producing large errors in printing thickness.

A further aspect of the present invention provides filaments for a three-dimensional printer that are produced by extrusion of the composition. The filaments include a polymer matrix containing an olefin block copolymer. The polymer matrix has a Shore A hardness not higher than 90. The polymer matrix has a melt index (190 °C, 2.16 kg) of 1 to 30 g/10 min and a melt index (120 °C, 10 kg) not higher than 3.0 g/10 min. The melt index (120 °C, 10 kg) is, for example, from 0.01 to 2.0 g/10 min, preferably from 0.01 to 1.0 g/10 min. Due to their melting properties, the filaments are rapidly solidified and have outstanding slip properties. The olefin block copolymer may have a peak melting point in the range of 100 to 150 °C, as measured by DSC. Within this range, the filaments are melted with low power consumption and are easy to extrude.

The filaments may have a diameter of 1.0 to 2.0 mm, preferably 1.5 to 1.8 mm. If the diameter of the filaments is smaller than 1 mm, a printing head adapted to push the filaments may be difficult to manufacture and a low printing speed may be caused. Meanwhile, if the diameter of the filament exceeds 2 mm, a low solidification rate of the filaments may be obtained and thick printing lines may be formed, resulting in low precision of a final product. The polymer matrix has a Shore A hardness not higher than 90. If the Shore A hardness of the polymer matrix exceeds 90, a soft rubber-like texture is difficult to obtain.

Another aspect of the present invention provides a method for manufacturing a solid article by three-dimensional printing with the filament for a three-dimensional printer. The method may be carried out by the following procedure. First, the filaments are supplied to a printing head. The filaments may be supplied to the printing head through a guide tube. Next, a hot melt of the filaments is ejected from the printing head. One layer is formed while a lower plate of the printer moves along the Y-axis and the printing head moves along the X-axis. After the printing head moves up by one step along the Z-axis, the layer is stacked with another layer while the lower plate and the printing head move along the Y- and X-axes, respectively. Then, the printing head moves up by one step along the Z-axis. In this manner, three-dimensional printing is achieved. Next, the melt is solidified to form a printing layer. This procedure is repeated to stack the printing layers, completing the manufacture of a solid article.

Another aspect of the present invention provides pellets for a three-dimensional printer that are produced using the composition. The pellets are produced by extrusion of a composition including a polymer matrix containing an olefin block copolymer. The pellets have the same advantages as those of the filaments.

The pellets include a polymer matrix containing an olefin block copolymer. The polymer matrix of the pellets has a Shore A hardness not higher than 90, as in the filaments. The polymer matrix has a melt index (190 °C, 2.16 kg) of 1 to 30 g/10 min and a melt index (120 °C, 10 kg) not higher than 3.0 g/10 min. The melt index (120 °C, 10 kg) is, for example, from 0.01 to 2.0 g/10 min, preferably from 0.01 to 1.0 g/10 min. Thus, the pellets are rapidly solidified and have an appropriately low melt index, enabling printing of fine lines without spreading of the extrudate upon printing. The olefin block copolymer may have a peak melting point in the range of 100 to 150 °C, as measured by DSC. Within this range, the pellets are melted with reduced power consumption and are easy to extrude.

The pellets are not limited to a particular shape but are preferably spherical in shape. The pellets may have a diameter of 0.5 mm to 3.0 mm, preferably 0.8 mm to 1.5 mm. The pellets having a diameter of less 0.5 mm may be difficult to produce and are not likely to descend into a cylinder from a hopper of the extruder. Meanwhile, if the pellets have a diameter of more than 3.0 mm, the diameter of the extruder should be large enough to feed the pellets into a cylinder of the extruder, eventually resulting in an increase in the size of the extruder. In this case, the excessively large extruder should be affixed to even a small printer, making it difficult to fabricate the printing machine.

Yet another aspect of the present invention provides a method for manufacturing an article by three-dimensional printing with the pellets for a three-dimensional printer. Three-dimensional printing using pellets as printing materials may be carried out in such a manner that the materials are ejected at a constant rate from an extruder arranged on an upper plate of the three-dimensional printer and a lower plate of the three-dimensional printer is allowed to move three-dimensionally. In this case, the machine has a complicated structure and is fabricated at high cost but the need for a process for the production of filaments is eliminated, making the method suitable for industrial applications where the use of a large amount of cheap materials is required.

In the case where the pellets are used as materials for a three-dimensional printer, a guide tube adapted to supply the materials to the printer is omitted and the surface slip properties of the materials are thus not required. However, fast melting of the materials in a cylinder of the extruder upon printing by extrusion and rapid solidification of the melt after printing are very important factors in terms of printing speed. In consideration of the factors, it is preferred that the MI (190 °C, 2.16 kg) of the pellets is at least 1.0 g/10 min. The composition is suitable for the production of pellets.

The present invention will be explained in more detail with reference to the following examples. However, these examples are not intended to limit the scope and spirit of the present invention.

### (EXAMPLES)

The components were blended together in compliance with the compositions shown in Table 1. Each composition was extruded using a single screw extruder having a screw diameter of 30 mm and a screw length of 1050 mm, cooled in a 1.5 m long cooling water bath, and rolled to produce filaments having a diameter of 1.75 mm. A die attached with a face cutter was affixed to a head of the extruder. Each composition was extruded using modified extruder, followed by cutting and cooling to produce pellets having a 1.0 mm diameter.

The melting points (Tₘ) of the polymers used were measured by DSC while increasing the temperature at a rate of 10 °C/min, in accordance with ASTM D-3418.
OBC-1: Ethylene octene block copolymer, specific gravity 0.855, DSC melting point 95 °C, Shore A hardness 45
OBC-2: Ethylene octene block copolymer, specific gravity 0.870, DSC melting point 120 °C, Shore A hardness 77
OBC-3: Propylene octene block copolymer, specific gravity 0.875, DSC melting point 140 °C, Shore A hardness 88
ORC-1: Ethylene octene random copolymer, specific gravity 0.900, DSC melting point 95 °C, Shore A hardness 90
EVA-1: Ethylene vinyl acetate copolymer, specific gravity 0.930, DSC melting point 80 °C, Shore A hardness 88
SEBS-1: Styrene ethylene butylene styrene, specific gravity 0.940, DSC melting point 140 °C, Shore A hardness 86
LDPE-1: Low density polyethylene, specific gravity 0.920, DSC melting point 109 °C, Shore D hardness 50

### Test methods

### 1. Solidification rate

The melting index (MI) of each composition was measured by ASTM D-1238. The solidification rate of the final mixture was classified into grades A, B, C, D, and E when the MI (120 °C, 10 kg) was 1.0 g/10 min or less, 1.1-2.0 g/10 min, 2.1-3.0 g/10 min, 3.1-5.0 g/10 min, and 5.1 g/10 min or more, respectively. That is, a higher MI (120 °C, 10 kg) indicates slower solidification at 120 °C.

### 2. Slip properties

Each of the final compositions was extruded to obtain a filament with a 1.75 mm diameter. The filament was passed through a polypropylene tube with a 2.5 mm inner diameter, a 4.5 mm outer diameter, and a 40 cm length. When the filament was pulled at a rate of 1 cm/sec, the resistance of the filament felt by hand was classified into grades A, B, C, D, and E whose resistances increased in the order: A (lowest) < B < C < D < E (highest).

The test results are shown in Table 1.

**<Table 1>**

| | Comparative Example 1 | Comparative Example 2 | Comparative Example 3 | Comparative Example 4 | Comparative Example 5 | Example 1 | Comparative Example 7 |
|---|---|---|---|---|---|---|---|
| OBC-1 | 100 | | | | | | |
| OBC-2 | | | | | | 100 | 100 |
| OBC-3 | | | | | | | |
| LDPE-1 | | 100 | | | | | |
| ORC-1 | | | 100 | | | | |
| EVA-1 | | | | 100 | | | |
| SEBS-1 | | | | | 100 | | |
| Paraffin oil | | | | | | | 6 |
| PE wax | | | | | | 2 | 5 |
| | | | | | | | |
| Shore A hardness | 45 | 99 | 90 | 88 | 86 | 78 | 70 |
| MI, g/10 min (190 °C, 2.16 kg) | 3.0 | 3.0 | 3.0 | 3.0 | 0.5 | 5.0 | 35.0 |
| Solidification rate | C | A | D | E | A | A | D |
| Slip properties | B | A | A | C | E | A | D |
| Suitability for filaments | Unsuitable | Unsuitable | Unsuitable | Unsuitable | Unsuitable | Suitable | Unsuitable |
| Suitability for pellets | Unsuitable | Unsuitable | Unsuitable | Unsuitable | Unsuitable | Suitable | Unsuitable |
| | | | | | | | |

| | Example 2 | Example 3 | Comparative Example 8 | | Example 4 | Example 5 | Example 6 |
|---|---|---|---|---|---|---|---|
| OBC-1 | | | | | | | |
| OBC-2 | | 85 | 75 | | 95 | 90 | |
| OBC-3 | 100 | | | | | | 85 |
| LDPE-1 | | | | | | | |
| ORC-1 | | 15 | 25 | | | | 15 |
| EVA-1 | | | | | 5 | | |
| SEBS-1 | | | | | | 10 | |
| Paraffin oil | 3 | | | | | | 3 |
| PE wax | 2 | 2 | 2 | | 2 | 3 | 2 |
| | | | | | | | |
| Shore A hardness | 88 | 83 | 85 | | 80 | 79 | 89 |
| MI, g/10 min (190 °C, 2.16 kg) | 7.0 | 4.0 | 3.5 | | 4.5 | 2.0 | 5.0 |
| Solidification rate | A | B | D | | B | A | B |
| Slip properties | A | A | A | | A | B | B |
| Suitability for filament | Suitable | Suitable | Unsuitable | | Suitable | Suitable | Suitable |
| Suitability for pellet | Suitable | Suitable | Unsuitable | | Suitable | Suitable | Suitable |

As can be seen from the results in Table 1, the compositions of Examples 1-6 were rapidly solidified and had excellent slip properties compared to the compositions of Comparative Examples 1-8. Due to these advantages, the compositions of Examples 1-6 are suitable for use as filament or pellet materials for 3D printers. The lower hardness values of the composition of Examples 1-6 enable the manufacture of articles with various shapes where a soft feeling is required, by 3D printing.

Although the present invention has been described in detail with reference to the embodiments thereof, those skilled in the art will appreciate that various modifications can be made to the embodiments without departing from the spirit and scope of the present invention.

## Claims

1. A polymer composition for a three-dimensional printer comprising a polymer matrix containing an olefin block copolymer whose peak melting point is 100 to 150 °C, as measured by differential scanning calorimetry (DSC), and whose Shore A hardness is not higher than 95 wherein the polymer matrix has a melt index (190 °C, 2.16 kg) of 1 to 30 g/10 min.

2. The polymer composition according to claim 1, further comprising one or more additional components selected from the group consisting of a process oil, a wax, a thermoplastic elastomer (TPE), an ethylene copolymer, and an olefin random copolymer (ORC).

3. The polymer composition according to claim 2, wherein the additional components are present in a total amount of 1 to 25 parts by weight, based on 100 parts by weight of the olefin block copolymer.

4. The polymer composition according to claim 1, wherein the olefin block copolymer is a multi-block copolymer which comprises ethylene and one or more copolymerizable α-olefin comonomers in a polymerized form and has a plurality of blocks or segments of two or more polymerized monomer units having different chemical or physical properties.

5. The polymer composition according to claim 1, wherein the olefin block copolymer is represented by the following formula:
**(AB)n**
wherein **n** is at least 1, **A** represents a hard block, **B** represents a soft block, **A** and **B** being linked in a linear configuration.

6. A filament for a three-dimensional printer that is produced by extrusion of a composition comprising a polymer matrix containing an olefin block copolymer wherein the polymer matrix has a Shore A hardness not higher than 90, a melt index (190 °C, 2.16 kg) of 1 to 30 g/10 min, and a melt index (120 °C, 10 kg) not higher than 3.0 g/10 min.

7. The filament according to claim 6, wherein the olefin block copolymer has a peak melting point of 100 to 150 °C, as measured by differential scanning calorimetry (DSC).

8. The filament according to claim 6, wherein the filament has a diameter of 1.0 to 2.0 mm.

9. A pellet for a three-dimensional printer that is produced by extrusion of a composition comprising a polymer matrix containing an olefin block copolymer wherein the polymer matrix has a Shore A hardness not higher than 90, a melt index (190 °C, 2.16 kg) of 1 to 30 g/10 min, and a melt index (120 °C, 10 kg) not higher than 3.0 g/10 min.

10. The pellet according to claim 9, wherein the olefin block copolymer has a peak melting point of 100 to 150 °C, as measured by differential scanning calorimetry (DSC).

11. A method for manufacturing a solid article by three-dimensional printing, the method comprising supplying the filament according to any one of claims 6 to 8 to a printing head, ejecting a hot melt of the filament from the printing head, solidifying the melt to form a printing layer, and repeating the above procedure to stack the printing layers.

12. A method for manufacturing a solid article by three-dimensional printing, the method comprising supplying the pellet according to claim 9 or 10 to a printing head, ejecting a hot melt of the pellet from the printing head, solidifying the melt to form a printing layer, and repeating the above procedure to stack the printing layers.
